# EUROPEAN PATENT APPLICATION

(11) **EP 0 909 632 A1**
(43) Date of publication of application: **21.04.1999**
(21) Application number: 97203246.0
(22) Date of filing: 17.10.1997
(51) Int. Cl.: B29C 65/02

(54) **Joint between thermoplastic parts forming the vessel of a water filter**

(71) Applicant: Aplister S.L., 17850 Sant Jaume de llierca (ES)
(72) Inventor: Garrigos Ruiz, Robert, 17850 Sant Jaume de Llierca (ES)
(74) Representative: Richebourg, Michel François

(57) **Abstract**

Joint between thermoplastic parts forming a vessel of a water filter, joining one part (1) against the other (2) having sufficiently softened the material of the part along the length of the joint line. The material softened is an excess amount (3) positioned on the edges to be joined, ensuring compaction between the melted material, and also the geometric evenness of the joint, by means of an auxiliary adjustment surface, which has cantilevers (5) places along the edges of the parts, keeping hidden any unsightly unevenness caused by melted material overflowing from the outer surface, as they are enclosed within an annular cavity formed by the cantilevers (5).

## Description

### PURPOSE OF THE INVENTION

The invention refers to the join between two cylindrical symmetric parts of plastic material, forming the vessel of a water filter; one part is pressure joined against the other after the material is heat softened near melting point, along the length of the joining line. The material melted is an excess amount along the edges to be joined, ensuring compaction between the softened material, and also geometric evenness of the join, by means of an auxiliary adjustment surface with cantilevers placed along the edges of the parts. The possible unevenness caused by the melted material overflowing the outer surface, is hidden as it remains enclosed within an annular cavity formed by these cantilevers.

### BACKGROUND OF THE INVENTION

Vessels for water filters are currently shaped by parts which are fixed together by mechanical means.

The mechanical means used are composed of complementary tightening elements on the opposite ends of the parts, in order to seal the join.

The use of these mechanical methods increases the cost of the unit, and are also an obstacle as they are positioned on the outer side of the vessel, and owing to the high pressures inside the vessel, they are no guarantee against water leaks appearing in the join in time.

### DESCRIPTION OF THE INVENTION

The invention includes the economical and final join of plastic parts through heat softening near melting point, with an electric resistance excess plastic material of these parts and later pressing one part against the other, thereby welding them together.

The excess plastic material which will shape the join of the parts is like a prolongation of the perimeter of the parts and directed parallel to their symmetry axis. The amount of excess material to be softened is a prolongation of between 0.5 and 3 cm. which is the thickness of the part itself.

The join line between the melted materials is hidden by L-section cantilevers which project from the perimeter of the parts, and which are matched once the heat-welding has been done.

These cantilevers are shorter in length than the prolongation formed by the excess material to be joined and finish on a flat surface which defines an imaginary plane parallel to the mouth of the corresponding part.

One of the purposes of these cantilevers is to shape and adjust the approximation limit of the parts during heat-welding, which therefore ensures their correct, final positioning after welding.

Another purpose of the cantilevers is that because of their "L" shape, once they are matched, they form an inside annular cavity, with sufficient capacity to hold the thickening caused by the deformation of material involved in the heat-welded join. This means that the possible unsightly aspect of uneven surfaces and colour of the welding line, will be removed.

### DESCRIPTION OF THE DIAGRAMS

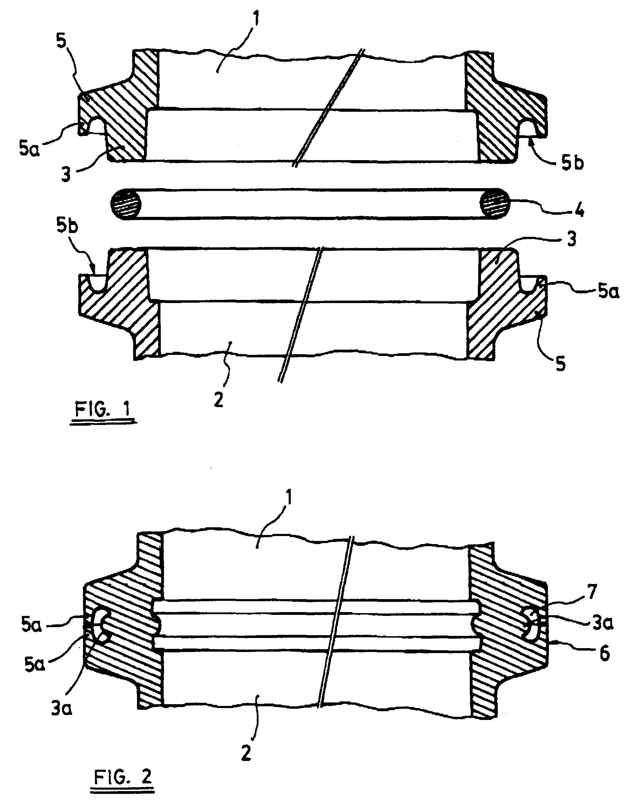

- Figure 1 shows a cross section of the join area of the parts which are at a slight distance from each other, and the electric resistance used to soften the material.
- Figure 2 shows a cross section of the parts once they are joined.

### PREFERENTIAL MANUFACTURE OF THE INVENTION

The parts (1 and 2) which will form the vessel of the filter have excess plastic material which form a prolongation in each one (3) directed parallel to the symmetry axis of the corresponding part.

The parts (1 and 2) are joined by heat-welding. The material of the prolongations (3) are sufficiently softened with an electric resistance (4) and the parts are then joined.

The join line of the parts (1 and 2) is hidden by L-shaped cantilevers (5) throughout the length of the perimeter, with their end side (5a) parallel to the symmetry axis of the corresponding part.

The cantilevers (5) are between 5 and 15 milimetres thick and their end side (5a) is shorter than the prolongation (3) of material used in the heat-welding join.

The end side (5a) of the cantilever concerned finishes in a flat surface (5b) which forms an imaginary plane parallel to the mouth of the corresponding part (1, 2).

The surfaces (5b) determine the approximation limit of the parts (1 and 2), ensuring correct heat-welding of prolongations (3) along the whole length.

When the parts (1 and 2) are placed together in a heat-welded join, the end sides (5a) of the cantilevers (5) form an intact outer surface (6) which hides the heat-welded join (3a).

Once the cantilevers (5) are joined, they form an inner annular cavity (7), of sufficient capacity to hold the material (3a) of the prolongations (3) which have been deformed by heat-welding and overflow from the initial surface of the parts (1 and 2).

## Claims

1. A join between thermoplastic parts forming a vessel of a water filter, characterised in that the join is made by pressing one part against another after softening the material of the part along the length of the join line near melting point. The softened material is the excess amount placed along the edges to be joined, thereby ensuring the compaction of the melted material, and also the geometric evenness of the join, by means of an auxiliary adjustment surface with cantilevers placed along the edges of the parts, keeping the possible unsightly unevenness produced by the melted material overflowing from the outer surface hidden, as it remains inside an annular cavity formed by the cantilevers.

2. A join, according to the previous claim, characterised in that the plastic material for this join is softened using an electrical resistance with preferably a circular surface.

3. A join, according to claim 1, characterised in that the excess plastic material of each of the initial parts is a prolongation from the perimeter of the part parallel to the symmetry axis, along the perimeter to be joined to the other part. The amount of excess material to be softened is a prolongation of between 0.5 and 3 cm. which is the thickness of the part itself.

4. A join, according to claim 1, characterised in that along each of the perimeters to be joined, an L-shaped cantilever projects, with its end side facing parallel to the symmetry axis in the direction of the join.

5. A join, according to claim 1, characterised in that the thickness of the claimed cantilever is between 5 and 15 millimeters.

6. A join, according to claim 4, characterised in that the end side of the claimed cantilever finishes in a flat surface.

7. A join, according to claim 4, characterised in that the end side of the claimed cantilever is shorter than the prolongation of material to be used to make the heat-welded join.

8. A join, according to claims 4 and 6, characterised in that the flat surface onto which the end side of the claimed cantilever ends, defines an imaginary plana parallel to the mouth of the corresponding part.

9. A join, according to claims 4, 6 and 8, characterised in that the flat surface of the short side of the cantilever forms and adjusts along the width of the imaginary plane parallel to the mouth of the part, the limt of approximation between the parts during the heat-welding operation.

10. A join, according to claims 1, 4, 5, 6, 7, 8 and 9, characterised in that the intact surface hiding the probable deformation of the heat-welded material, is shaped by the external surfaces of the end sides of the two cantilevers, on their flat surfaces becoming joined during the process of pressing one part against another having melted the excess material to be used for the heat-welding operation.

11. A join, according to claims 1, 4, 5, 6, 7, 8, 9 and 11, characterised in that after heat-welding, the inside of the joined cantilevers form an annular cavity of sufficient capacity to hold the material deformed by heat-welding which overflows from the initial surface of the parts.
